# FASCICULE DE BREVET EUROPEEN

(11) **EP 1 648 640 B1**
(45) Date de publication et mention de la délivrance du brevet: **15.04.2009**
(21) Numéro de dépôt: 04738087.8
(22) Date de dépôt: 14.07.2004
(51) Int. Cl.: B23B 27/16

(54) **OUTIL DE COUPE**
SCHNEIDWERKZEUG
CUTTING TOOL

(30) Priorité: 16.07.2003 EP 03405544
(43) Date de publication de la demande: 26.04.2006
(73) Titulaire: Applitec Moutier S.A., 2740 Moutier (CH)
(72) Inventeur: CHAMPION, François, CH-2740 Moutier (CH); SCHALLER, Vincent, CH-2742 Perrefitte (CH)
(74) Mandataire: GLN
(86) Numéro de dépôt international: PCT/CH2004/000447
(87) Numéro de publication internationale: WO 2005/007329

(56) Documents cités:
- DE-A- 3 617 119
- US-A- 5 931 613

## Description

La présente invention se rapporte au domaine de l'usinage. Elle concerne plus particulièrement un outil de coupe à plaquette rapportée selon le préambule de la revendication 1, qui est, du type présenté par exemple dans le document US 5 931 613 A.

Les céramiques utilisées pour réaliser la plaquette conservent leurs caractéristiques physiques même à très haute température, ce qui permet ainsi de travailler à des vitesses de coupe élevées. Malheureusement, ces matériaux sont fragiles et coûteux. C'est pourquoi, le porte-plaquette est fabriqué dans un autre type de matériau, par exemple de l'acier trempé, qui est plus élastique, facilement usinable et de moindre coût.

Comme présenté dans le document PCT/CH 00/00335 au nom de la demanderesse, le porte-plaquette comporte, généralement, un logement destiné à recevoir la plaquette, dont une paroi forme une assise munie de sillons parallèles, qui définissent un axe longitudinal X-X.

La plaquette est constituée d'une portion centrale et de deux ailes disposées de part et d'autre de la portion centrale et destinées à assurer une fonction d'usinage. La portion centrale comprend des faces planes respectivement d'appui et supérieure qui sont parallèles entre elles, la distance qui les sépare définissant l'épaisseur de la plaquette. La face d'appui est munie de gorges destinées à coopérer avec les sillons de l'assise pour assurer le positionnement relatif de la plaquette et du porte-plaquette

La portion centrale est munie d'un ou de deux trous la traversant de part en part, d'axes perpendiculaires à l'axe longitudinal X-X et aux faces d'appui et supérieure.

Les moyens de fixation sont constitués d'une vis engagée dans chacun des trous de la plaquette et coopérant avec un taraudage que comporte le porte-plaquette, pour les rendre solidaires.

Les plaquettes sont réalisées par frittage. Pour obtenir une précision suffisante, il peut être nécessaire de les rectifier afin que les sillons soient parfaitement en regard des gorges.

Cette opération étant coûteuse, la demanderesse a développé une structure de plaquette particulière, décrite dans le document EP 01810254.1, dans laquelle sa base présente une concavité longitudinale. Ceci permet d'assurer un contact des saillies sur les extrémités des creusures, de sorte que le positionnement soit garanti et reproductible. A cause de la concavité longitudinale, la partie centrale de la plaquette est affaiblie, de telle sorte que si elle était fixée avec une seule vis, elle risquerait de se casser. C'est pourquoi, le serrage se fait au moyen de deux vis disposées au voisinage des points d'appui. Cela implique que le volume de la plaquette est relativement important, ce qui augmente son prix.

Le but de la présente invention est de réduire le prix de la plaquette sans affecter sa solidité ni sa précision.

De façon plus précise, l'outil de coupe selon l'invention comporte un outil de coupe ayant les caractéristiques décrites dans la revendication 1.

L'outil comporte encore l'une ou l'autre des caractéristiques suivantes.
- La plaquette comporte un flanc, attenant à la section centrale, qui présente, dans sa partie reliée au fond de la gorge, une inclinaison par rapport à un axe parallèle à celui Y-Y du trou, alors que le porte-plaquette comporte un flanc reliant le sillon aligné sur l'axe longitudinal X-X au fond de la creusure et possédant une même inclinaison par rapport à un axe parallèle à celui Y-Y du trou.
- Ladite inclinaison est d'environ 20°.
- Ledit flanc incliné de la plaquette est attenant audit anneau central.
- Ladite plaquette présente un arrondi dans sa partie reliée à l'anneau.
- Les parois des sillons et des gorges forment, avec la face d'appui, des angles d'environ 45°.

D'autres avantages et caractéristiques de l'invention ressortiront de la description qui va suivre, faite en regard du dessin annexé, dans lequel :

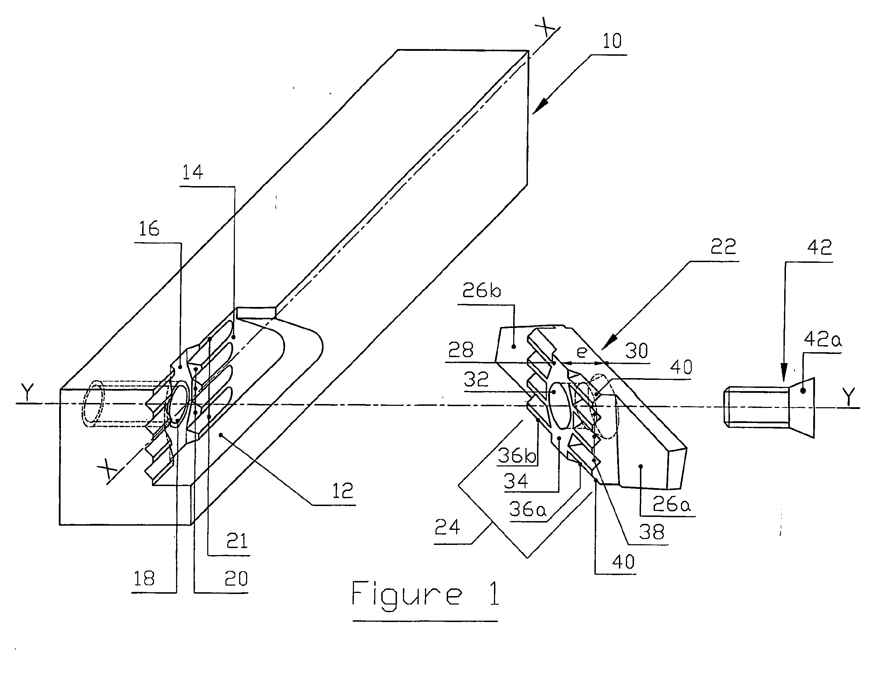

- la figure 1 représente, vus en perspective, un porte-plaquette et une plaquette équipant un outil selon l'invention ;
- les figures 2 et 3 sont des vues longitudinales de l'outil selon l'invention, respectivement en coupe et de dessus ; et
- la figure 4 montre, selon une vue de face, l'outil assemblé. La figure 1 représente un porte-plaquette 10, formé d'une barre en acier trempé, de forme générale parallélépipédique allongée, dont le plus grand côté est parallèle à un axe X-X longitudinal. Ce porte-pièce 10 est muni, à l'un de ses coins, d'un logement 12 destiné à recevoir une plaquette qui sera décrite ci-après.
   Le logement 12 comprend des parois longitudinales dont l'une, portant la référence 14, assure une fonction d'assise. Cette dernière comporte, dans sa partie médiane, considérée selon l'axe longitudinal X-X, une creusure 16 et un trou taraudé 18 d'axe Y-Y perpendiculaire à l'axe X-X.
   De part et d'autre de la creusure 16, l'assise 14 présente trois sillons 20 parallèles entre eux, répartis régulièrement sur la largeur et orientés selon l'axe X-X, le sillon du milieu passant par le centre du trou 18, et un rebord 21 correspondant sensiblement à un demi-sillon.
   Une plaquette 22, représentée en regard du porte-plaquette, comprend une portion centrale 24 et deux ailes 26a et 26b disposées de part et d'autre de la portion centrale 24. Chacune des ailes 26 est munie, à son extrémité libre, d'une arête de coupe permettant d'assurer la fonction d'usinage.
   La portion centrale 24 comporte une face d'appui 28 et une face supérieure 30 parallèle à la face d'appui. Ces faces sont séparées l'une de l'autre d'une distance définissant l'épaisseur e maximale de la plaquette 22.
   Un trou cylindrique 32, destiné à recevoir une vis de serrage, traverse la plaquette 22 de part en part, de la face supérieure 30 à la face d'appui 28.
   La portion centrale 24 comprend, du côté de sa face d'appui, une section médiane plane 34 dans laquelle débouche le trou 32, et deux sections latérales 36a et 36b prolongeant la section médiane 34 dans le sens longitudinal.
   La partie de la section médiane 34 entourant le trou 32 est de forme générale annulaire, alors que les côtés sont de forme générale rectangulaire, de dimension, selon l'axe X-X, sensiblement égale aux deux-tiers du diamètre extérieur de la partie annulaire.

Trois gorges 38 sont pratiquées dans les sections latérales 36, chacune destinée à recevoir un des sillons 20. Des biseaux 40 sont disposés de part et d'autre des gorges 38 et sont destinés à coopérer avec les rebords 21.

Les parois latérales des gorges 38 sont reliées entre elles par des surfaces planes se trouvant au même niveau que la surface de la section médiane 34, formant ainsi des dents s'étendant longitudinalement de part et d'autre de la section médiane 34.

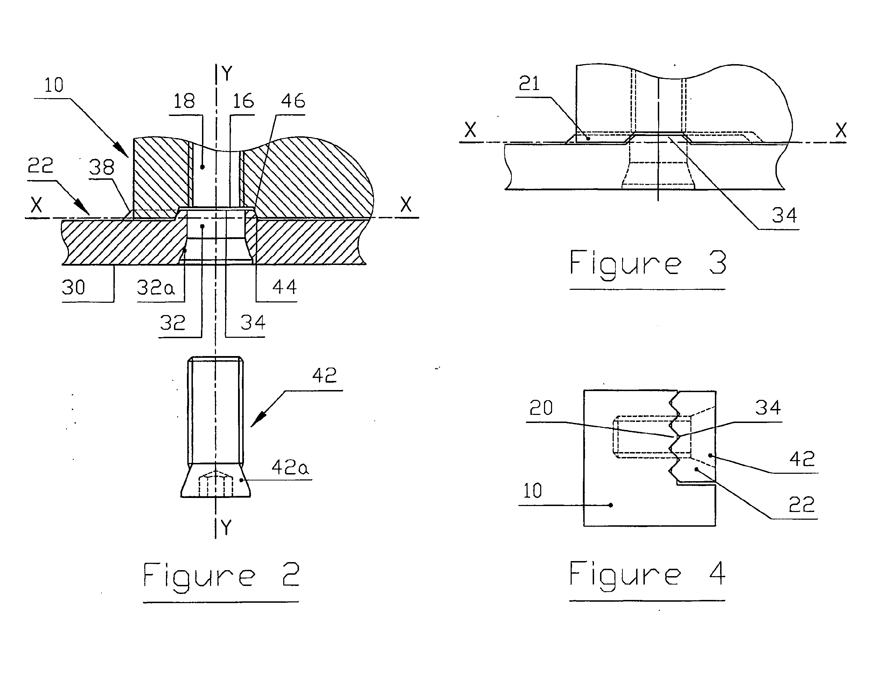

Si l'on se réfère à la figure 2, qui est une vue en coupe passant par les axes X-X et Y-Y, on peut voir que le trou 32 présente, du côté de la face 30, une noyure conique 32a. Une vis 42 est engagée dans le trou 32, serrée dans le trou taraudé 18, sa tête conique 42a se trouvant en appui contre la noyure 32a, pour exercer sur la plaquette 22 une force garantissant sa fixation sur le porte-plaquette 10.

La creusure 16 est suffisamment profonde pour que la section médiane 34 qui se trouve en regard n'entre pas en contact avec le porte-plaquette 10.

Les gorges 38, spécialement celle alignée sur l'axe X-X et visible à la figure 2, sont reliées à la section médiane 34 par un plan incliné 44 faisant un angle d'environ 20° avec cet axe. La partie supérieure de la paroi qui délimite la fin de la gorge du côté de la section médiane 34 est arrondie sur un tiers environ de la hauteur.

Par ailleurs, le flanc 46 reliant le sillon 20 aligné sur l'axe X-X au fond de la creusure 16 est également incliné d'environ 20 ° par rapport à cet axe.

La figure 3 est une vue de côté de l'outil assemblé. Elle permet de voir que les flancs de l'extrémité des rebords 21 et ceux de la partie rectangulaire de la section médiane 34 font un angle de 45° avec l'axe X-X. Une telle inclinaison permet d'assurer la meilleure étanchéité possible, entre le porte-plaquette 10 et la plaquette 22, permettant d'éviter que des copeaux ne pénètrent dans l'espace compris entre le fond de la creusure 16 et la section médiane 34.

Comme on peut le voir sur la figure 4, qui est une vue frontale de l'outil, les gorges et les sillons sont dimensionnés de manière à ce que leurs flancs seulement coopèrent les uns avec les autres. Ces flancs présentent une inclinaison de 45° par rapport à la surface plane de la section médiane.

De la sorte, lors de la fixation de la plaquette 22 sur le porte-plaquette 10, le serrage de la vis 42 exerce une force axiale appliquant la plaquette sur le porte-plaquette 10, les flancs latéraux des gorges et des sillons coopérant les uns avec les autres pour garantir un positionnement latéral. La plaquette peut être dimensionnée de manière à ce que l'axe du trou 32 soit légèrement décalé par rapport à l'axe de la vis 42, de manière à engendrer une force longitudinale améliorant la qualité du positionnement de la plaquette 22 sur le porte-plaquette 10.

A cause de la grande épaisseur de la section médiane, la plaquette est renforcée dans sa partie susceptible de se casser lors du serrage ou en cours d'usinage. Elle présente ainsi une bonne rigidité. Les moyens de positionnement garantissent, en outre, un bon calage de la plaquette sur le porte-plaquette, de telle sorte que la portion médiane peut être très courte, soit environ 1,5 fois la largeur de la plaquette. De la sorte, le volume de la plaquette peut être considérablement réduit par rapport aux plaquettes connues assurant les mêmes conditions de positionnement et la même rigidité.

## Revendications

1. Outil de coupe à plaquette rapportée, du type comportant :
- un porte-plaquette (10) comprenant une assise (14) munie d'une creusure (16) et de sillons (20) parallèles qui définissent un axe longitudinal X-X, et percée d'un trou (18),
- une plaquette d'usinage (22) qui comprend une portion centrale (24) et deux ailes (26a, 26b) disposées de part et d'autre de la portion centrale (24) et chacune destinée à assurer une fonction d'usinage, ladite portion centrale (24) comprenant :
- une face d'appui (28), munie d'une surface plane et une face supérieure plane (30), parallèle à ladite surface, la distance entre ladite surface et la face supérieure définissant l'épaisseur maximale (e) de la plaquette,
- un trou (32) la traversant de part en part, d'axe Y-Y perpendiculaire à l'axe longitudinal X-X et auxdites faces (28, 30) et disposé en regard du trou (18) du porte-plaquette,
- des gorges (38) pratiquées dans la face d'appui (28), agencées de manière à recevoir lesdits sillons (20) pour assurer le positionnement de la plaquette (22) sur le porte-plaquette (10),
- du côté de la face d'appui (28), une section médiane (34) plane, inscrite dans la surface dans laquelle débouche le trou (32) et disposée en regard de ladite creusure (16), et
- deux sections latérales (36a, 36b) prolongeant la section médiane (34) et dans lesquelles sont pratiquées lesdites gorges (38), et
- une unique vis de fixation (42) de la plaquette engagée dans lesdits trous (18, 32),
**caractérisé en ce que** ladite section médiane plane (34) s'étend tout autour du trou (32) pour ainsi former un anneau plein de surface continue et **en ce que** ladite creusure (16) est dimensionnée de manière à ce que ladite section médiane (34) qui se trouve en regard de ladite creusure n'entre pas en contact avec le porte-plaquette (10).

2. Outil selon la revendication 1, **caractérisé en ce que** ladite plaquette (22) comporte un flanc, attenant à la section centrale, qui présente, dans sa partie reliée au fond de la gorge, une inclinaison par rapport à un axe parallèle à celui Y-Y du trou (32), alors que le porte-plaquette (10) comporte un flanc reliant le sillon (20) aligné sur l'axe longitudinal X-X au fond de la creusure et possédant une même inclinaison par rapport à un axe parallèle à celui Y-Y du trou (18).

3. Outil selon la revendication 2, **caractérisé en ce que** ladite inclinaison est d'environ 20°.

4. Outil selon la revendication 2, **caractérisé en ce que** ledit flanc incliné de la plaquette est attenant audit anneau central.

5. Outil selon la revendication 4, **caractérisé en ce que** ladite plaquette présente un arrondi dans sa partie reliée à l'anneau.

6. Outil selon l'une des revendications 1 à 5, **caractérisé en ce que** les parois des sillons (20) et des gorges (38) forment, avec la face d'appui (28), des angles d'environ 45°.

## Claims

1. A cutting tool with an inserted tip, of the type comprising:
- a tip holder (10) comprising a seat (14) provided with a recess (16) and with parallel grooves (20) which define a longitudinal axis X-X, and pierced with a hole (18),
- a machining tip (22) comprising a central portion (24) and two wings (26a, 26b) arranged on either side of the central portion (24) and designed each to provide a machining function, said central portion (24) comprising:
■ a support face (28) with a flat surface and a flat upper face (30), parallel to said surface, the distance between said surface and the upper face defining the maximum thickness (e) of the plate,
■ a hole (32) passing right through it, of axis Y-Y perpendicular to the longitudinal axis X-X and to said faces (28, 30), and arranged opposite the hole (18) in the tip holder,
■ furrows (38) made in the support face (28), designed to receive said grooves (20) to position the tip (22) on the tip holder (10),
■ on the side of the support face (28), a flat middle section (34), contained within the surface where the hole (32) opens out and located opposite said recess (16), and
■ two lateral sections (36a, 36b) extending the middle section (34) and in which said furrows (38) are made, and
- a single screw (42) for attaching the tip, engaged in said holes (18, 32),
**characterized in that** said flat middle section (34) extends all around the hole (32), thus forming a solid ring having a continuous surface, and **in that** said recess (16) is dimensioned in such a way that said middle section (34) opposite said recess does not to come into contact with the tip holder (10).

2. The tool as claimed in claim 1, **characterized in that** said tip (22) comprises a slope, adjoining its central section, which is, in its part connected to the bottom of the furrow, inclined with respect to an axis parallel to that Y-Y of the hole (32), while the tip holder (10) has a slope joining the groove (20) aligned on the longitudinal axis X-X to the bottom of the recess and having the same inclination with respect to an axis parallel to that Y-Y of the hole (18).

3. The tool as claimed in claim 2, **characterized in that** said inclination is around 20°.

4. The tool as claimed in claim 2, **characterized in that** said inclined slope of the tip adjoins said central ring.

5. The tool as claimed in claim 4, **characterized in that** said tip has a rounded part in its part connected to the ring.

6. The tool as claimed in one of claims 1 to 5, **characterized in that** the walls of the grooves (20) and of the furrows (38) make angles of approximately 45° with the support face (28).

## Patentansprüche

1. Schneidwerkzeug mit aufgesetztem Plättchen, von der Art umfassend:
- einen Plättchenhalter (10) umfassend eine Grundlage (14), die mit einer Kehle (16) und mit parallelen Furchen (20), die eine Längsachse X-X festlegen, versehen ist und durch die ein Loch (18) gebohrt ist,
- ein Bearbeitungsplättchen (22), das einen mittleren Abschnitt (24) und zwei Flügel (26a, 26b) umfasst, die auf beiden Seiten des mittleren Abschnitts (24) angeordnet sind, und jeweils dazu gedacht sind, eine Bearbeitungsfunktion zu erfüllen, wobei der mittlere Abschnitt (24) folgendes umfasst:
- eine Auflageseite (28), die mit einer ebenen Oberfläche und einer ebenen Oberseite (30) versehen ist, wobei der Abstand zwischen der Oberfläche und der Oberseite die Höchstdicke (e) des Plättchens festlegt,
- ein Loch (32), das ganz durch diese hindurch geht, mit einer Achse Y-Y, die zur Längsachse X-X und zu den Seiten (28, 30) rechtwinklig ist und gegenüber dem Loch (18) des Plättchenhalters angeordnet ist,
- Rillen (38), die in der Auflageseite (28) angebracht sind, die derart angeordnet sind, dass sie die Furchen (20) aufnehmen, um die Positionierung des Plättchens (22) auf dem Plättchen halter (10) sicherzustellen,
- auf der Seite der Auflageseite (28) ein ebenes Mittelstück (34), das in die Oberfläche eingepasst ist, auf die das Loch (32) ausmündet, und gegenüber der Kehle (16) angeordnet ist, und
- zwei Seitenstücke (36a, 36b), die das Mittelstück (34) verlängern, und in denen die Rillen (38) angebracht sind, und
- eine einzelne Schraube (42) zum Befestigen des in die Löcher (18, 32) in Eingriff gebrachten Plättchens,
**dadurch gekennzeichnet, dass** das ebene Mittelstück (34) sich ganz um das Loch (32) herum erstreckt, um so einen massiven Ring mit durchgehender Oberfläche zu bilden, und dass die Kehle (16) derart bemessen ist, dass das Mittelstück (34), das sich gegenüber der Kehle befindet, nicht mit dem Plättchenhalter (10) in Berührung kommt.

2. Werkzeug nach Anspruch 1, **dadurch gekennzeichnet, dass** das Plättchen (22) eine Flanke umfasst, die an den mittleren Abschnitt angrenzt und in ihrem Teil, der mit dem Boden der Rille verbunden ist, eine Neigung im Verhältnis zu einer Achse aufweist, die parallel zur Y-Y-Achse des Lochs (32) ist, während der Plättchen halter (10) eine Flanke umfasst, welche die Furche (20), die auf die Längsachse X-X ausgerichtet ist, mit dem Boden der Kehle verbindet und im Verhältnis zu einer Achse, die zur Y-Y-Achse des Lochs (18) parallel ist, die gleiche Neigung besitzt.

3. Werkzeug nach Anspruch 2, **dadurch gekennzeichnet, dass** die Neigung ungefähr 20° beträgt.

4. Werkzeug nach Anspruch 2, **dadurch gekennzeichnet, dass** die geneigte Flanke des Plättchens an den mittleren Ring grenzt.

5. Werkzeug nach Anspruch 4, **dadurch gekennzeichnet, dass** das Plättchen in seinem mit dem Ring verbundenen Teil eine Rundung aufweist.

6. Werkzeug nach einem der Ansprüche 1 bis 5, **dadurch gekennzeichnet, dass** die Wände der Furchen (20) und der Rillen (38) mit der Auflageseite (28) Winkel von ungefähr 45° bilden.
